# EUROPEAN PATENT APPLICATION

(11) **EP 2 584 522 A2**
(43) Date of publication of application: **24.04.2013**
(21) Application number: 12189436.4
(22) Date of filing: 22.10.2012
(51) Int. Cl.: G06Q 50/16, G06Q 10/04, A47L 9/28

(54) **A system for assessing a spatial use load of a building, a method for using the system, a dirt collector device and a method of covering a floor, both for use in the said system or method**

(30) Priority: 23.10.2011 EP 11186273
(71) Applicant: Bond Textile Research BV, 5971 LW Grubbenvorst (NL)
(72) Inventor: Reutelingsperger, Christiaan Mathias Hubertus Gerard, 5944 BK Arcen (NL)
(74) Representative: Janssen, Paulus J. P.

(57) **Abstract**

The present invention pertains to a system suitable for assessing a spatial use load of a building comprising allocating to at least one floor of the building one or more predetermined locations, a first sensing means for sensing the presence of a dirt collector device at each one of the said locations, a second sensing means for sensing the amount of dirt being collected by dirt collector device, and a processing unit for generating data related to the amount of dirt collected by the dirt collector device at each of the said locations. The invention also pertains to a method for assessing any parameter that is related to the amount of dirt collected by a dirt cleaning device from a floor of a building.

## Description

### Field of the invention

The present invention in particular pertains to a system which is suitable for assessing a spatial use load of a building, a dirt collector device and type of floor covering suitable for use in the system. The invention also pertains to a method for assessing any parameter that is related to the amount of dirt collected by a dirt cleaning device from a floor of a building.

### Background of the invention

In the art of facility management, one of the items to address is the spatial use load of a building. Diagnosing the spatial use load gives a good indication of the (expected) wear of the building itself, in particular the local wear, such as the local wear of furniture, doors (handles, hinges, paint etc), bathrooms (tiles, taps, toilet-seats etc.), floor coverings, etc. A good diagnosis is advantageous since it may lead to a good prediction of the wear of the building and thus of maintenance costs, but also, it may lead to insight about spatial differences in wear. For example, it may very well be that particular locations of the building are prone to excessive wear whereas other parts of the building are hardly used at all. Such a situation may lead to excessive maintenance costs since it is often decided to refurbish a building completely when parts of it are completely worn. If it would be clear that the spatial use load of a building is very uneven, one can respond by reshuffling the functions of rooms of a building, or changing routes in a building, moving people to other locations etc. in order to provide an even spatial use of the building and hence, an even wear.

With contemporary methods, spatial use load is at best reasonably predicted. Still, the actual use load can only be assessed after substantial use of the building, which might be too late for an adequate management of the use of the building. Also, an assessment of the use load often only gives an indication of the actual wear at one predetermined moment in time, typically after several years. Based on such information, it is hard to change the use of the building to arrive at an even wear.

### Object and summary of the invention

There is a need for a system which enables an improved assessment of the spatial use load of a building, at least partly overcoming the problems with contemporary methods as indicated *supra,* in order to improve facility management of the said building. There is a need for a system that enables assessment of the spatial use load directly after the building has been occupied for actual use, and which allows convenient and adequate assessment during regular intervals at low costs.

To this end a system has been devised comprising allocating to at least one floor of the building one or more predetermined locations (i.e. at least indicating various alternative locations of the floor), a first sensing means for sensing the presence of a dirt collector device at each one of the said locations, a second sensing means for sensing the amount of dirt being collected by the dirt collector device, and a processing unit for generating data related to the amount of dirt collected by the dirt collector device at each of the said locations.

The invention is i.a. based on applicant's insight that the amount of dirt present on the floor at a certain location in the building may correspond to the use load of the building at that location. This insight, together with the fact that normally a building is regularly cleaned by collecting dirt from the floor (e.g, by vacuum cleaning), has led to the idea to use the process of dirt collection by a dirt collector device, to establish the amount of dirt being present at various locations in the building. For this, it is needed that during the dirt collecting process, the presence of the device at various locations is sensed (e.g. by using cameras), while at the same time establishing the amount of dirt collected by the device at the various locations (for example by measuring a change of the content of a dirt collection bag of a cleaning device). Being able to sense the amount of dirt being collected by the device at each location, means that data can be generated that relate thereto, in particular data that indicate the spatial use load of the building. Also contemplated however are data that indicate the air quality in the rooms of the building (the air quality is inherently related to the amount of dirt being collected from the floor), or the cleaning performance of the dirt collector device.

The above insight has led to the conclusion that the invention is suitable for assessing any parameter that is related to the amount of dirt being collected by a dirt cleaning device from at least one floor of a building, in particular by performing the steps of allocating to the at least one floor of the building one or more predetermined locations, cleaning the at least one floor with the dirt collector device, sensing the presence of the dirt collector device at the said locations, sensing the amount of dirt being collected by the dirt collector device, generating data corresponding to the amount of dirt collected by the cleaner at each of the said locations, and ultimately assessing the parameter using the generated data.

Also, the invention pertains to devices and materials for use in the above described system and method. In particular the invention additionally pertains to a dirt collector device comprising a first sensor to sense the presence of an identification element adjacent a surface to be cleaned, a second sensor to sense the amount of dirt being collected by the dirt collector device and a processing unit to process data pertaining to the said identification element and amount of dirt, and to the use of this dirt collector device.

The invention also pertains to a method to cover a floor for use in the present system or a method, this method comprising covering the floor with multiple separate floor covering elements, for example carpet tiles, at least part of these elements comprising an identification element, and offering the covered floor for use in combination with a first sensing means for sensing the presence of a dirt collector device at each one of the said locations, a second sensing means for sensing the amount of dirt being collected by the dirt collector device, and a processing unit for generating data corresponding to the amount of dirt collected by the cleaner at each of the said locations.

Additionally, the invention pertains to the use of an identification element, for example an RFID chip, to manufacture a floor covering element, for example a carpet tile, to enable the identification of the floor covering element in a method according to the present invention as described here-above.

It is noted that from JP 2006055214 (assigned to NEC Corp) a cleaning quality evaluation system is known, comprising a floor being provided with a pattern of RFID chips, and a vacuum cleaner having a sensor to determine whether or not the vacuum cleaner has passed the locations where the chips are present. After finishing the cleaning action, it is evaluated whether or not each chip is read by the sensor of the vacuum cleaner. There is however no establishment of the amount of dirt being collected by the vacuum cleaner let alone the amount of dirt collected at each of the said locations. The known method therefore cannot be used for assessing a parameter that is related to the amount of dirt being present on a floor of a building, such as for example the spatial use load of the building, a cleaning performance of the floor and air quality in the building.

### Definitions

*Sensing the amount* of *dirt*: to determine an integer that corresponds to the amount of dirt, typically but not necessarily dirt being suspended in a gas or liquid.

Dirt: particulate impurities such as dust (may included any grade of dust from above PM₁₀, or even above PM₁₀₀, to Ultrafine), sand, vegetable matter, paper matter, plastic matter, etc.

*Dirt collector device*: any device suitable for collecting dirt from a floor such as a vacuum cleaner, a roller cleaner, brush cleaner, a scrubber (each optionally using a liquid for cleaning and collecting the dirt) etc.

### Embodiments of the invention

In an embodiment of the system according to the invention the first sensing means comprises a pattern of identification elements provided adjacent the at least one floor, each element corresponding to one of the said predetermined locations, and in combination therewith, a sensor for sensing each identification element, the sensor being present in the dirt collector device. In this embodiment the first sensing means as a whole thus comprise identification elements provided at the locations and an adequate sensor present in the dirt collector device to sense these elements. This embodiment has the advantage over for example the use of cameras that it is inexpensive and still allows reliable tracking of the location of the dirt collector device. In a further embodiment the identification elements are provided in floor covering elements.

Although known from the above mentioned reference JP 2006055214 to provide the identification elements in or directly on top of the floor and thereafter cover the floor with a layer of for example carpet or linoleum, it was applicant's recognition that it is very advantageous to provide the identification elements in floor covering elements such as for example tiles or planks. This provides the opportunity to conveniently replace broken elements, or to change the pattern of elements if desired, or to change the number of elements present. Such changes may be desired when for example the established spatial use load is significantly different than the predicted use load at the time the building was designed, or when the facility manager needs a more detailed assessment, or for any other reason. In a preferred embodiment the floor covering elements are carpet tiles. Applicant found that such tiles are ideally suitable to carry identification elements and also, can be conveniently replaced. Particularly preferred identification elements are radio frequency identification (RFID) chips, which are inexpensive, robust and easy to sense.

In an embodiment the second sensing means is provided in the dirt collector device. It appears to be convenient and reliable to sense the amount of dirt being collected, in the device itself. A concomitant advantage of this embodiment is that the cleaning power of the dirt collector device can instantly be adjusted to the amount of dirt being collected (typically, when for example below average amounts of dirt are collected per unit of time, the power of the dirt collector device may be lowered). In an embodiment the second sensing means comprises a combination of a radiation emitting element, preferably a light emitting diode, and a radiation sensor element, preferably a charge coupled device. With such an arrangement, dirt particles being suspended in a liquid or gas can be conveniently sensed, for example as individual particles or as a collection of particles distributing radiation. The use of radiation and a corresponding sensor to measure a number of particles, their volume, particle size distribution or volume distribution is commonly known in the art, in particular in the art of particle size measurement apparatus such as available from Malvern, Brookhaven Instruments, CILAS, Retsch and Microtrac.

In an embodiment the processing unit is distributed over the dirt collector device and a central processing unit (CPU) at a remote location. In this embodiment part of the processing of data generated takes place in the dirt collector device itself. Typically this comprises the mere collection of the data and generating files comprising these data. The initially processed data are then further processed in a remote CPU, which can handle data originating from multiple devices being used at the same time. This is in line with the common set up of working stations with limited processing capabilities and a central server with large processing capabilities. In a further embodiment a part of the processing unit present in the dirt collector device generates data about the presence of the said device at a said location at a moment in time, and additionally, the amount of dirty being collected in time. In yet a further embodiment wherein the dirt collector device is connected to a power net for providing the power to generate a dirt collecting action, the said part of the processing unit present in the dirt collecting device is operatively connected to the CPU via the power net, typically via a so-called D-Bus system.

In an embodiment of the method according to the invention the parameter is chosen from the group consisting of a spatial use load of the building, a cleaning performance of the dirt collector device and air quality in the building. As indicated here-above, it was applicant's insight that with the system according to the invention, any parameter that is related to the amount of dirt being collected from a floor by a dirt collector device can be assessed. That the spatial use load of a building and the cleaning performance are directly linked to the amount of dirt collected is clear. However, applicant also found out that the amount of dirt being collected is related to the air quality in the building. Depending in essence on the type of building, its use and the frequency of dirt collecting, a relationship between the amount of dirt present on the floor (and thus: the amount of dirt that can be collected by the device) and the quality of the air exists. Once this relationship is assessed, providing data about the amount of dirt being collected, provides information about the quality of the air in the building.

In an embodiment the data are generated in relationship with time. In this embodiment, the data are linked to certain moments in time. This way it is not only clear how great the amount of dirt being collected at a predetermined location is, but also when the dirt is collected, or for example (depending on how the data is generated) how long it takes to collect the dirt at the said location, how the amount of dirt collected varies from time to time etc. Linking the amount of dirt collected to "location" and "time" greatly improves the possibilities of assessing parameters that are related to the amount of dirt present on a floor of a building. In a preferred embodiment the amount of dirt collected at a location is established at predetermined intervals, for example at intervals at which a floor should be cleaned in accordance with a cleaning scheme. In another embodiment the amount of dirt collected per unit of time is established at the moment when the dirt collector device leaves a location. The latter gives great insight in the actual cleaning performance of the floor and also in the resulting air quality in the building. For example, if the amount of dirt that is being collected is still very high at the moment of leaving the location, this means that there is a lot of residual dirt on the floor at that location. High amounts of residual dirt are a direct indication of a bad cleaning performance and for many types of floor coverings, also a direct indication of a bad air quality, *viz.* air with high amounts of suspended dust.

The invention will now be further explained based on the following figures and examples.

### Figures and Examples

Figure 1 schematically shows a floor covering element.
Figure 2 schematically shows a floor of a building.
Figure 3 schematically shows a dirt collector device.
Figure 4 schematically shows a dirt sensing means.
Figure 5 schematically shows a layout between sensors and processing units.
Figure 6 shows a relationship between the amount of dirt collected, and the locations where the dirt has been collected.

Example 1 gives a first example of how a parameter related to the amount of dirt collected by a dirt cleaning device is assessed.

Example 2 gives a second example of how a parameter related to the amount of dirt collected by a dirt cleaning device is assessed.

Example 3 gives a third example of how a parameter related to the amount of dirt collected by a dirt cleaning device is assessed.

### Figure 1

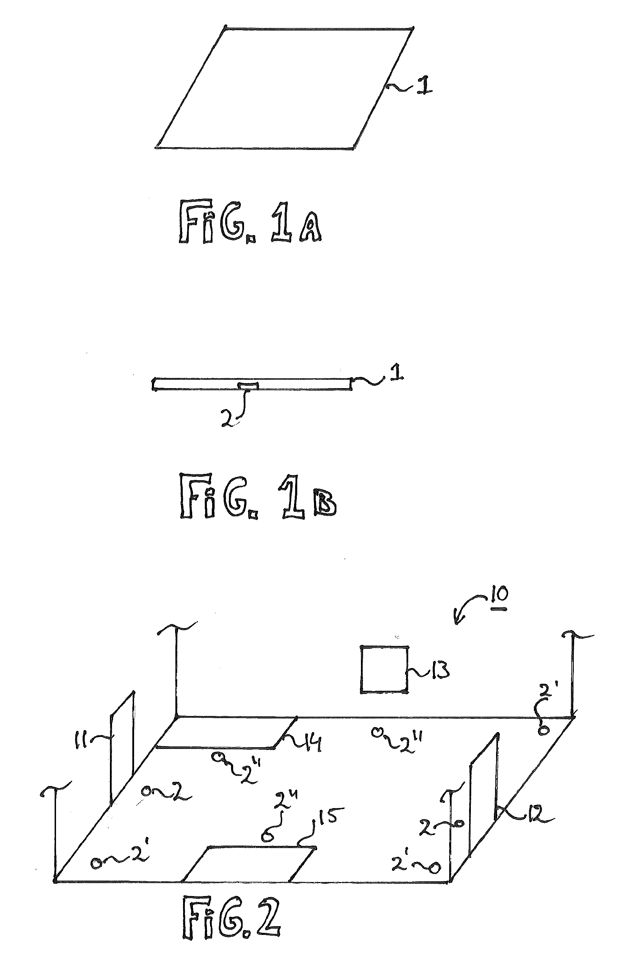

Figure 1A schematically shows a floor covering element 1. In this embodiment, the element is a carpet tile, comprising a top layer of tufted loop piles (not shown) attached to a latex backing (not shown). Figure 1B shows the presence of an RFID chip present at the backside of the carpet tile. This chip is suitable for identification of the carpet tile as part of a complete floor coverage layer.

### Figure 2

Figure 2 schematically shows a floor 10 of a building (other parts of the building not shown). The floor 10 defines a room which room can be entered and left via doors 11 and 12. The room also has a window 13 and locations 14 and 15 to put desks (desks not shown). The floor 10 is covered with carpet tiles, some of which tiles comprise RFID chips for identification purposes. These tiles are present at those locations which are assumed to be critical for assessing a parameter that is related to the amount of dirt being collected by a dirt cleaning device. As indicated, tiles which RFID chips 2 are present adjacent the doors 11 and 12. Tiles with chips 2' are present at the corners of the room defined by floor 10. Lastly, tiles with chips 2" are present at those locations where users of the room are assumed to significantly present, i.e. at their desks and before window 13. This way, multiple predetermined locations are allocated to the floor 10, simply by covering the floor such that at the predetermined locations, identification elements are present, which elements are suitable to be able and identify (and thus distinguish between) the various locations of the floor. In this embodiment, the floor is covered with one type of carpet tiles, approximately 400 tiles of which 8 tiles are provided with an RFID chip.

### Figure 3

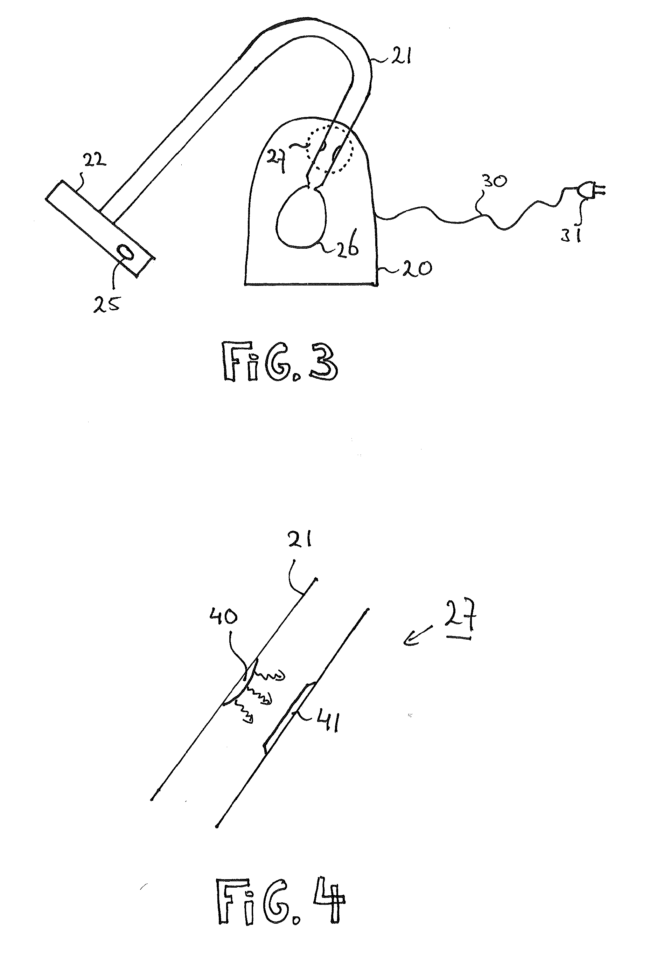

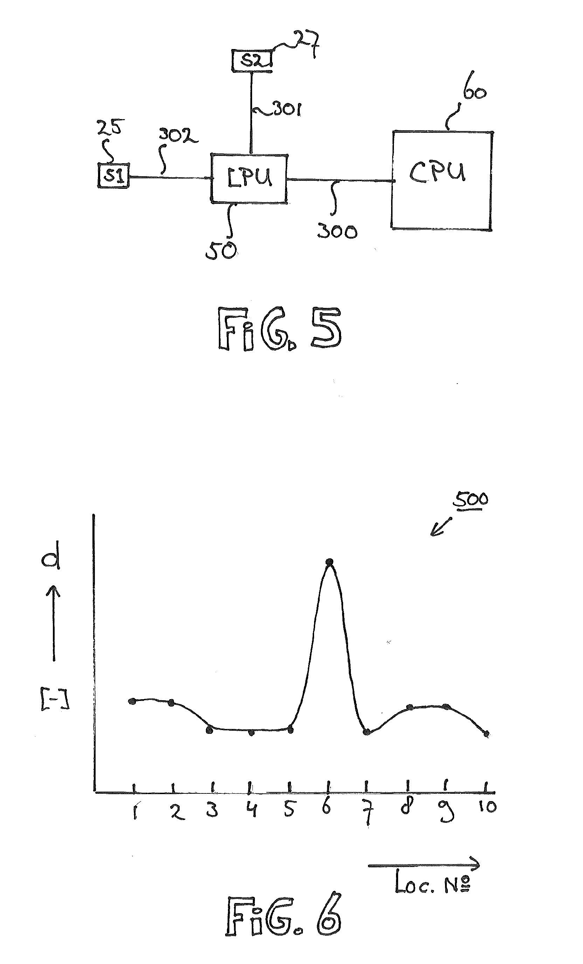

Figure 3 schematically shows a dirt collector device, in this embodiment a vacuum cleaner 20. The vacuum cleaner imparts a vacuum in tube 21, which tube is connected to cleaning foot 22. This way, at the foot 22, when moving the foot over a floor, such as for example floor 10 of figure 2, an air flow is created that is directed from the floor to dirt collecting bag 26. This way, dirt being present on the floor can be collected in the vacuum cleaner. The foot 22 of the cleaner is provided with a first sensing means for sensing an RFID chip as described in conjunction with figures 1 and 2. This way, when sensed, the presence of the vacuum cleaner at each of the said locations corresponding to chips 2 (including chips 2' and 2") is actually sensed. The sensor 25 is operatively connected (in this embodiment via a wire) with a local processing unit (not shown) in the vacuum cleaner (se also figure 5). The vacuum cleaner is provided with a second sensing means 27 for sensing the amount of dirt being collected by the vacuum cleaner (which also includes the sensing of an amount of dirt that corresponds to the actual amount of dirt being collected). This means is shown in more detail in figure 4. The second sensing means is also operatively connected to the local processing unit of the vacuum cleaner. The vacuum cleaner is provided with a cable 30 and plug 31 for connecting the cleaner to a power net. The same cable and plug are used to connect the local processing unit to a central processing unit to process gathered data, see figure 5.

### Figure 4

Figure 4 schematically shows a dirt sensing means. In this embodiment the means comprise a laser radiation emitting element 40 and a charge coupled device 41 that may receive such radiation. When dirt passes between elements 40 and 41, this results in a diffraction of the radiation and thus in a different amount of radiation being picked up by element 41. This way, the amount (including type, particle size etc) of dirt being collected by the cleaner can be sensed.

### Figure 5

Figure 5 schematically shows a layout between sensors 25 and 27 and processing units 50 and 60. Sensor S1 (25) and S2 (27) have been discussed in relation with figures 3 and 4. These sensors are operatively connected via wires 302 and 301 respectively to local processing unit 50 in the vacuum cleaner. This LPU is present on the printed circuit board of the cleaner 20. The LPU is operatively connected to a remote central processing unit 60 via wiring 300. Please note that in alternative embodiments one or more of the operative connections between the sensors and processing units may be wireless.

The LPU takes care of the coal data gathering, i.e. the sensing of the RFID chips in the floor covering at a certain moment in time, and the sensing of the amount of dirt being collected in time. These data are transferred to CPU 60 for further processing.

### Figure 6

Figure 6 shows a relationship 500 between the amount of dirt collected, and the locations where the dirt has been collected. In this embodiment, a floor is divided in 10 locations, named 1 through 10 (meaning that the floor has 10 locations at which identification elements are present for recognizing each location). These locations are present along the horizontal axis. Along the vertical axis the amount of dirt being collected at one particular day in a week is being indicated (no actual numbers are give, it is a mere schematic - relative - representation of the amount of dirt collected). As can be seen, at locations 1, 2, 8 an 9 an average amount of dirt was collected on that day. At locations 3, 4, 5, 7, and 10 a less than average amount of dirt was collected. At location 5 a very high amount of dirt has been collected that particular day.

### Example 1

Example 1 is a first example of how a parameter related to the amount of dirt collected by a dirt cleaning device, in this case air quality in various rooms of the building, is assessed. This example pertains to a building having 10 rooms, each room having its own floor. To each room one predetermined location is allocated, adjacent the middle of the room (which locations are not covered by any furniture). These locations are numbered 1 through 10. Long term experience has learnt that each room is evenly used and that the exposure to dirt is also evenly distributed among the rooms.

In this case, the air quality in the rooms is being assessed by using the present system and method. For this, the amount of dirt that is being collected by a dirt cleaning device is measured each day. The monthly totals per location (which corresponds to "per room" in this case) are monitored. When a monthly total would be according to figure 6, it appears that at locations 1 to 5 and 7 to 1o about the same amount of dirt is being collected in a month. At location 6 however, a significant higher amount of dirt is being collected. Knowing that the rooms are evenly used and evenly exposed to dirt, this means that significantly more dirt is constantly removed from location 6 by the dirt cleaning device. This inherently means that at the other locations, dirt remains on the floors. As a result, the air quality, in particular the amount of circulating dust in the air is inherently the best at location 6 and of worse quality at the other locations. Close examination of the data gathered by the dirt collector device might in such case simply lead to the insight that the amount of time spend at that location for cleaning is significantly longer than at the other locations. This implies that the total cleaning time is not evenly divided among the rooms which give rise to differences in cleaning performance and thus air quality.

### Example 2

Example 2 gives a second example of how air quality is assessed. In line with example 1, this second example also pertains to a building having 10 rooms, each room having its own floor. To each room one predetermined location is allocated, adjacent the middle of the room. These locations are numbered 1 through 10.

In this case, each room is of equal size. All rooms are vacuumed once a week and the amount of time spent vacuuming each room is exactly the same (this can be monitored by measuring the time between sensing different identification elements). The use load of each location (room) and the exposure to dirt for each location are unknown for this new building. Long term assessment of the amount of dirt collected at each location learns that it is a very steady state. Each time the amount of dirt collected per location corresponds substantially to the relation as depicted in figure 6. In this case, given the fact that per room the same time is spend for vacuuming, this means that the room that corresponds to location 6 is exposed to a significant higher amount of dirt than the other rooms. Inherently, this means that the air quality in that room is substantially worse than in the other rooms. It appears that in rooms 3 to 5, 7 and 10 the smallest amount of dirt is collected from the floor. This means that these rooms have the least exposure to dirt and thus also, that the air quality (in particular the amount of circulating fine dust) is best in these rooms.

Correspondingly, it may be so that the use load of the room corresponding to location 6 is significantly higher than the rooms, which would explain the higher exposure to dirt. If this room for example is near the entrance of a building and used for passing through to reach other locations of the building, this might explain the higher exposure to dirt and hence the higher use load. Knowing this, facility management can decide to reroute traffic in the building to try and get an even distribution of the use load amount the rooms 1 to 10.

### Example 3

Example 3 gives a third example of how a parameter related to the amount of dirt collected by a dirt cleaning device, in this case cleaning performance, is assessed. In this example a floor (corresponding to one room) has 10 predetermined locations allocated to it (cf figure 2), each location being provided with a carpet tile having an RFID chip. Assuming that in this room, dirt is more or less distributed evenly (since it is an office room having an even distribution of cubicles), an outcome for the various locations in line with figure 6 would mean that for the locations other than 6, the amount of dirt collected is far less than maximum. One could draw the conclusion that cleaning performance for this room is thus far below optimum. However, these data would normally in the first place lead to an examination of location 6. If this location for example appears to be right next to a coffee machine, this might explain the great amount of dirt (i.c. spilled sugar and coffee creamer). In that case, cleaning performance could be assessed to be OK for the room.

## Claims

1. System suitable for assessing a spatial use load of a building comprising:
- allocating to at least one floor of the building one or more predetermined locations,
- a first sensing means for sensing the presence of a dirt collector device at each one of the said locations,
- a second sensing means for sensing the amount of dirt being collected by the dirt collector device,
- a processing unit for generating data related to the amount of dirt collected by the dirt collector device at each of the said locations.

2. A system according to claim 1, **characterised in that** the first sensing means comprises a pattern of identification elements provided adjacent the at least one floor, each element corresponding to one of the said predetermined locations, and in combination therewith, a sensor for sensing each identification element, the sensor being present in the dirt collector device.

3. A system according to claim 2, **characterised in that** the identification elements are provided in floor covering elements.

4. A system according to any of the preceding claims, **characterised in that** the second sensing means is provided in the dirt collector device.

5. A system according to any of the preceding claims, **characterised in that** the processing unit is distributed over the dirt collector device and a central processing unit (CPU) at a remote location.

6. A system according to claim 5, **characterised in that** a part of the processing unit present in the dirt collector device generates data about the presence of the said device at a said location at a moment in time, and additionally, the amount of dirty being collected in time.

7. A method suitable for assessing a parameter that is related to the amount of dirt collected by a dirt cleaning device from at least one floor of a building, comprising:
- allocating to the at least one floor of the building one or more predetermined locations,
- cleaning the at least one floor with the dirt collector device,
- sensing the presence of the said device at the said locations,
- sensing the amount of dirt being collected by the said device,
- generating data corresponding to the amount of dirt collected by the device at each of the said locations, and
- assessing the parameter using the generated data.

8. A method according to claim 7, **characterised in that** the parameter is chosen from the group consisting of a spatial use load of the building, a cleaning performance of the dirt collector device and air quality in the building.

9. A method according to claim 7 or 8, **characterised in that** the data are generated in relationship with time.

10. A method according to claim 9, **characterised in that** the amount of dirt collected at a location is established at predetermined intervals.

11. A method according to any of the claims 7 to 10, **characterised in that** the amount of dirt collected per unit of time is established at the moment when the dirt collector device leaves a location.

12. A dirt collector device comprising a first sensor to sense the presence of an identification element adjacent a surface to be cleaned, a second sensor to sense the amount of dirt being collected by the device and a processing unit to process data pertaining to the identification element and amount of dirt.

13. Use of a dirt collector device according to claim 12 in a system according to any of the claims 1 to 6 or a method according to any of the claims 7 to 11.

14. Method to cover a floor for use in a system according to any of the claims 1 to 6 or a method according to any of the claims 7 to 11, comprising:
- covering the floor with multiple separate floor covering elements, for example carpet tiles, at least part of these elements comprising an identification element, and
- offering the covered floor for use in combination with a first sensing means for sensing the presence of a dirt collector device at each one of the said locations, a second sensing means for sensing the amount of dirt being collected by the dirt collector device, and a processing unit for generating data corresponding to the amount of dirt collected by the cleaner at each of the said locations.

15. Use of an identification element, for example an RFID chip, to manufacture a floor covering element, for example a carpet tile, for use in a system according to any of the claims 1 to 6 or a method according to any of the claims 7 to 11.
